# EUROPEAN PATENT APPLICATION

(11) **EP 2 611 165 A1**
(43) Date of publication of application: **03.07.2013**
(21) Application number: 12198438.9
(22) Date of filing: 20.12.2012
(51) Int. Cl.: H04N 13/00, H04N 13/04, H04N 5/92, H04N 9/804, H04N 9/82, G11B 27/034, G11B 27/10, H04N 21/2365, H04N 21/2343, H04N 21/434, H04N 21/426, H04N 21/488, H04N 21/45, H04N 21/432, H04N 21/47

(54) **Image processing apparatus and control method thereof**

(30) Priority: 28.12.2011 KR 20110145315
(71) Applicant: Samsung Electronics Co., Ltd, Gyeonggi-do 443-742 (KR)
(72) Inventor: Kim, Tae-hong, Gyeonggi-do (KR); Lim, Doo-hee, Gyeonggi-do (KR)
(74) Representative: Taor, Simon Edward William

(57) **Abstract**

An image processing apparatus and a method of controlling the image processing apparatus, are provided. The method includes: receiving a user command to select contents; searching for image quality control information which corresponds to contents selected according to the user command; and performing an image quality control according to the searched image quality control information. The apparatus includes a user interface (UI) unit which receives a user command to select contents; and a controller which searches for image quality control information which corresponds to contents selected according to the user command and performs an image quality control according to the searched image quality control information.

## Description

The present general inventive concept generally relates to an image processing apparatus and a control method thereof. More particularly, the present general inventive concept relates to an image processing apparatus which can play contents, and a method of controlling the apparatus.

In general, an image processing apparatus performs image processing based on an image signal which is input. Here, the image signal which is input includes broadcast contents and external image contents such as Digital Versatile Disk (DVD) contents.

Also, as an Internet Protocol (IP) broadcast service begins with the spread of an ultrahigh Internet network, an Internet Protocol Television (IPTV) system has provided an image service, such as movies, news, or the like, according to a request of a user which is similar to Video On Demand (VoD) contents.

When various types of image contents are provided, a user may directly set image quality through an image quality setup menu in order to view particular contents in a highest image quality.

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide an image processing apparatus which can provide image quality information which respectively corresponds to contents, and a method of controlling the apparatus.

According to an aspect of the exemplary embodiments, there is provided a method of controlling an image processing apparatus. The method may include: receiving a user command which is to select contents; searching for image quality control information which corresponds to contents selected according to the user command; and performing an image quality control according to the searched image quality control information.

The image quality control information which corresponds to a characteristic of each of the contents may be searched.

The image quality control information which corresponds to each image may be searched according to whether a display image is a 2-dimensional (2D) or 3-dimensional (3D) image.

The image quality control information which corresponds to a product model of the image processing apparatus may be searched.

The image quality control information included in metadata added to the contents may be searched.

The image quality control information which corresponds to the contents may be searched through a network.

The image quality control information which corresponds to the contents may be searched through an internal or external storage medium.

According to another aspect of the exemplary embodiments, there is provided an image processing apparatus. The image processing apparatus may include: a user interface (UI) unit which receives a user command to select contents; and a controller which searches for image quality control information which corresponds to contents selected according to the user command and performs an image quality control according to the searched image quality control information.

The controller may search for the image quality control information which corresponds to a characteristic of each of the contents.

The controller may search for the image quality control information which corresponds to each image according to whether a display image is a 2-dimensional (2D) or 3-dimensional (3D) image.

The controller may search for the image quality control information which corresponds to a product model of the image processing apparatus.

The controller may detect the image quality control information found in metadata added to the contents.

The controller may search for the image quality control information which corresponds to the contents through a network.

The controller may search for the image quality control information which corresponds to the contents through an internal or external storage medium.

According to another aspect of the exemplary embodiments, there is provided a computer readable recording medium storing a program executing the method.

According to a further aspect of the exemplary embodiments, there is provided method of controlling an image processing apparatus, the method including receiving a command to select contents; selecting contents according to the command; searching for image quality control information which corresponds to the selected contents; and performing an image quality control according to the searched image quality control information. The command may be a user command.

An additional aspect of the exemplary embodiments may provide an image processing apparatus including an interface (UI) unit which receives a command to select contents; and
a controller which searches for image quality control information which corresponds to selected contents and performs an image quality control according to the searched image quality control information. The interface (UI) unit may be a user interface unit.

The above and/or other aspects will be more apparent by describing certain exemplary embodiments with reference to the accompanying drawings, in which:
FIG. 1 is a view schematically illustrating an operation of an image processing apparatus according to an exemplary embodiment of the present inventive concept;
FIG. 2 is a block diagram illustrating a structure of an image processing apparatus according to an exemplary embodiment of the present inventive concept;
FIG. 3 is a block diagram illustrating a structure of a contents providing server according to an exemplary embodiment of the present inventive concept;
FIGS. 4A and 4B are views illustrating user interface (UI) screens according to various exemplary embodiments of the present inventive concept;
FIG. 5 is a flowchart illustrating a method of controlling an image processing apparatus according to an exemplary embodiment of the present inventive concept; and
FIG. 6 is a flowchart illustrating a method of controlling an image processing apparatus according to another exemplary embodiment of the present inventive concept.

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

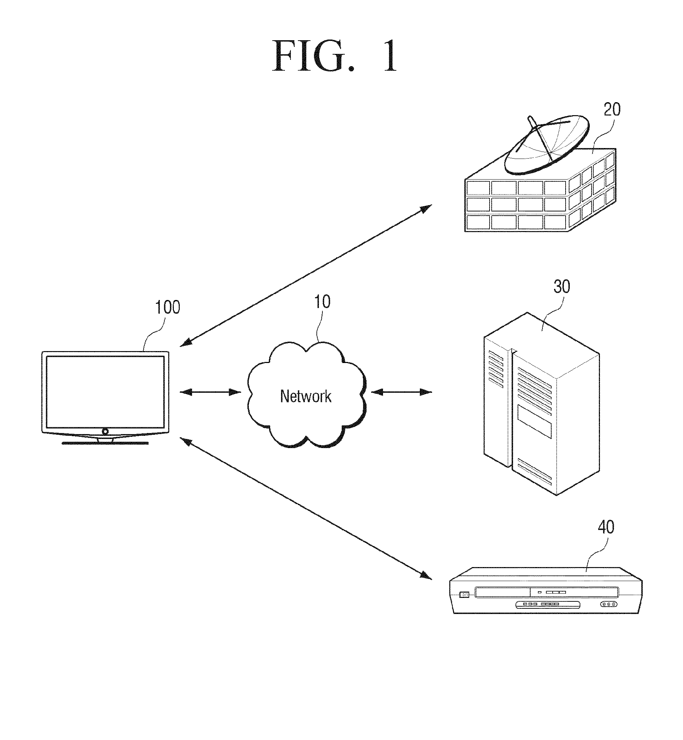

FIG. 1 is a view schematically illustrating an operation of an image processing apparatus 100 according to an exemplary embodiment of the present inventive concept.

Referring to FIG. 1, the image processing apparatus 100 may be provided with various types of contents through various routes. Here, the various routes may be a broadcast company 20, a contents providing server 30 connected to the image processing apparatus 100 through a network 10, and an external contents player 40.

The image processing apparatus 100 may receive recorded broadcast contents, real-time broadcast contents, etc. from the broadcasting company 20 and may receive pre-produced contents from the contents providing server 30. Here, the pre-produced contents may be Video on Demand (VoD) contents, premium VoD contents, broadcast contents, Internet contents, local files, external contents connected through a Digital Living Network Alliance (DLNA) network, or the like. For example, the contents providing server 30 may be realized as a server which provides VoD contents and may download VoD contents or may provide VoD contents in a streaming format. Therefore, the contents providing server 30 may build a database (DB) for various types of multimedia contents and store the various types of multimedia contents in the DB. However, the contents providing server 30 may communicate with an additional data providing server (not shown) in order to be provided with contents.

The image processing apparatus 100 may be provided with contents which are played by the external contents player 40. Here, the external contents player 40 may be various types of apparatuses which can play contents, such as a digital versatile disk (DVD), a portable phone, an MP3, or the like.

Here, contents are not limited to moving picture content and refer to all types of contents which are displayable, such as pictures, still images, or the like.

The image processing apparatus 100 may search for image quality control information which corresponds to displayed contents and may set an image quality according to the searched image quality control information. Here, the image quality control information which corresponds to the displayed contents may be at least one of image quality control information which corresponds to a characteristic of each of contents, image quality control information according to whether contents are 2-dimensional (2D) or 3-dimensional (3D) contents, and image quality control information which corresponds to a model of the image processing apparatus 100. Two or more pieces of such image quality control information may be simultaneously applied to play one content.

The image processing apparatus 100 may be realized as a TV which can display or play contents, a set-top box, a portable phone, a personal computer (PC), a notebook computer, a personal digital assistant (PDA), a tablet PC, or the like, and may be implemented to have a contents playing function. However, the image processing apparatus 100 may be implemented to perform only a function of signal-processing and displaying contents played from an additional contents player (not shown).

In particular, if the image processing apparatus 100 is implemented as a TV, the image processing apparatus 100 may be implemented as an Internet Protocol Television

(IPTV). The IPTV refers to a bidirectional television service which is served by using an ultrahigh Internet network and may connect a TV to the contents providing server 200 through a set-top box and an Internet network.

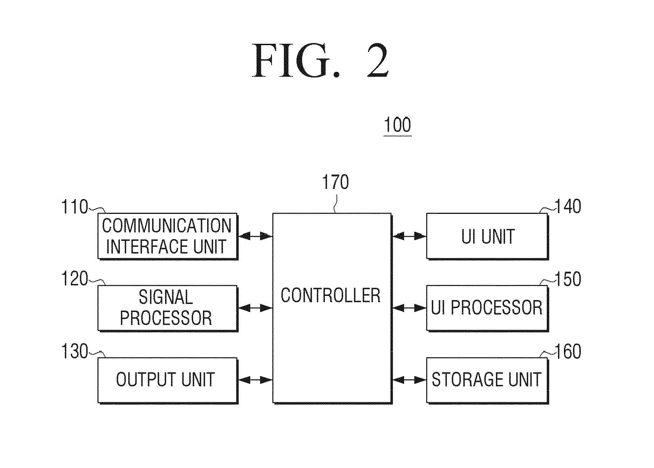

FIG. 2 is a block diagram illustrating a structure of an image processing apparatus 100 according to an exemplary embodiment of the present inventive concept.

Referring to FIG. 2, the image processing apparatus 100 includes a communication interface unit 110, a signal processor 120, an output unit 130, a user interface (UI) unit 140, a UI processor 150, a storage unit 160, the following string of Japanese characters ( 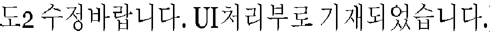 ), and a controller 170.

The communication interface unit 110 receives broadcast contents through an antenna, a cable, or the like or receives contents from an external device or an external communication network.

In particular, the communication interface unit 110 may receive various types of contents through a network or over the airways. Here, the contents may be various types of contents such as pre-produced contents, broadcast contents, or the like.

In this case, the communication interface unit 110 may be realized in various forms. For example, if the image processing apparatus 100 is implemented as a TV or a set-top box, the communication interface unit 110 may be implemented as a tuner, an external input port, a network communication module, or the like.

If the image processing apparatus 100 is implemented as a portable terminal such as a smartphone or a PDA, the communication interface unit 110 may be implemented as a wireless communication module which supports a communication network, such as a 3G network or a WiFi network.

The signal processor 120 processes various types of signals received through the communication interface unit 110. Therefore, the signal processor 120 may include a signal processing element such as a demodulator, a decoder, analog-to-digital converter (ADC), a scaler, etc.

The output unit 130 outputs contents signal-processed by the signal processor 120. Here, the output unit 130 may be implemented to include a display (not shown) and a speaker (not shown). Here, the display may be implemented as a cathode ray tube (CRT), a liquid crystal display (LCD), a thin film transistor liquid crystal display (TFT-LCD), a plasma display panel (PDP), a flexible display, a head-mounted display (HMD) or the like.

In particular, the output unit 130 may output various types of UI screens generated by the UI processor 150 under control of the controller 170.

The UI unit 140 receives a user signal.

In particular, the UI unit 140 receives a user command to select contents.

Here, the UI unit 140 may be implemented in various forms according to a type of the image processing apparatus 100.

For example, if the image processing apparatus 100 is implemented as a TV or a set-top box, the UI unit 140 may be implemented as a remote control receiver which receives a remote control signal.

The UI unit 140 may be implemented as an input panel which includes a plurality of keys or a touch screen in which a display and a touch pad are layered.

If the UI unit 140 is implemented as the touch screen in which the display and the touch pad are layered, the UI unit 140 may be used as the output unit 130, which will be described later.

The UI processor 150 generates various types of UI elements, which are overlapped and displayed with an image output from the output unit 130, under control of the controller 170. Here, the UI processor 150 may generate a 2D or 3D type UI element.

In particular, the UI processor 150 may generate various types of UI screens which are to select an image quality which corresponds to contents received through the communication interface unit 120.

The UI processor 150 may perform jobs such as a 2D/3D change, transparency, color, size, form, and position adjustments, a highlight, an animation effect, etc., of an UI element under control of the controller 170.

The storage unit 160 is a storage medium which stores various types of programs necessary for operating the image processing apparatus 100 and may be implemented as a memory, a hard disk drive (HDD), or the like. For example, the storage unit 160 may store a program for performing an operation of the controller 170 and may temporarily store data acquired through the performance of the operation of the controller 170 or may store various types of reference data.

The storage unit 160 may store at least one of image quality control information according to types and genres of contents and 3D/2D images and image quality control information which corresponds to a product model of the image processing apparatus 100. The storage unit 160 may store a combination of the above-mentioned image quality control information. Here, the types of the contents may be divided into categories such as a movie, an animation, a drama, a news, a cultural program, an entertainment program, etc. The genres of the contents may be divided into categories such as action, melo, horror, detective, fantasy, thriller, comedy, etc.

For example, the storage unit 160 may store image quality control information which corresponds to contents whose genre is action and image quality control information which corresponds to contents whose type is a movie and whose genre is action. Such image quality control information may be periodically updated.

The storage unit 160 may store image quality control information which corresponds to contents which have been played by the image processing apparatus 100.

The controller 170 controls an overall operation of the image processing apparatus 100.

In particular, the controller 170 searches for image quality control information which corresponds to contents selected according to a user command input through the UI unit 140 and controls an image quality according to the searched image quality control information.

In particular, the controller 170 may search for image quality control information which corresponds to a characteristic of each of the contents.

The controller 170 may search image quality control information according to whether a display image corresponds to a 2D or 3D image.

The controller 170 may search for image quality control information which corresponds to the product model of the image processing apparatus 100.

In this case, the controller 170 may search for image quality control information included in metadata added to the selected contents or may search for image quality control information which corresponds to contents selected through a network.

For example, the controller 170 may analyze a file header in order to decode a file of the selected contents and search for image quality control information having the same file name and header information from a network, through header information. If the selected contents are broadcast contents, the controller 170 may receive and apply image quality control information which is provided in a metadata format from a corresponding broadcasting company.

The controller 170 may search an internal or external storage medium for image quality control information which corresponds to the selected contents.

For example, if there exists a file having the same file name as a contents file in a folder storing the contents file when playing the contents file stored in the internal or external storage medium, the controller 170 may analyze the corresponding file to apply image quality control information. In this case, the file having the same file name may have a different extension from the corresponding contents file.

Here, the image quality control information may include information about a screen mode, backlight, brightness, sharpness, black tone, contrast, color, tint, a position and a size of subtitles, etc.

Image quality control information which corresponds to a 2D image may have a slightly different format from image quality control information which corresponds to a 3D image.

For example, the image quality control information which corresponds to the 2D image may include backlight, brightness, sharpness, contrast, color, and tint, and the image quality control information which corresponds to the 3D image may further include depth, viewpoint, etc.

Therefore, different types of image quality control information may be provided with respect to the same types of contents according to whether the contents are 2D or 3D images.

Image quality control information may include equalizer information (a balance, an amplification level of each frequency band), SRS TruSurround HD, volume information, etc.

If at least one or more image quality control information which corresponds to contents selected by a user is searched, the controller 170 may provide a UI screen which is to select an image quality desired by the user. The controller 170 may apply image quality control information which corresponds to the selected contents without providing a UI screen. In this case, in response to a plurality of pieces of image quality control information existing, the controller 170 may apply image quality control information having the highest priority according to preset priorities. Alternatively, the controller 170 may apply an average value of the plurality of pieces of image quality control information.

Although not shown in FIG. 2, the image processing apparatus 100 may further include a contents player (not shown).

The contents player plays contents received through the communication interface unit 110 or contents stored in the storage unit 160.

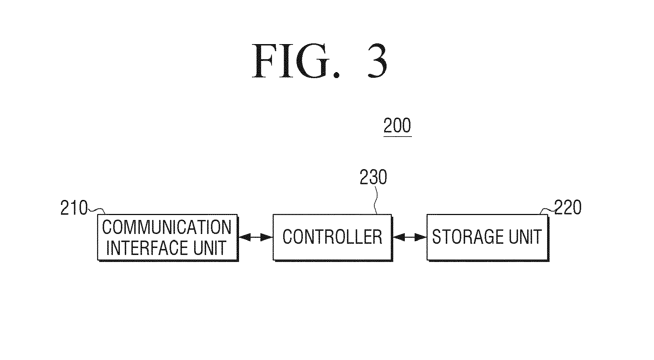

FIG. 3 is a block diagram illustrating a structure of a server 200 according to an exemplary embodiment of the present inventive concept.

Referring to FIG. 3, the server 200 includes a communication interface unit 210, a storage unit 220, and a controller 230. Here, the server 200 may be implemented as a server, which provides contents, such as a broadcasting company server, a VoD contents providing server, or the like, but is not limited thereto. The server 200 may be implemented as a server which provides image quality control information separately from the contents. However, for descriptive convenience, the server 200 will be hereinafter understood to be a server which provides image quality control information along with contents.

The communication interface unit 210 communicates with the image processing apparatus 100 and provides pre-stored contents or contents received from an external data server (not shown) according to a request of the image processing apparatus 100. Here, the contents may be broadcast contents, VoD contents, or the like.

The communication interface unit 210 may provide image quality control information along with the contents or separately from the contents.

The storage unit 220 may store image quality control information which corresponds to each of various types of contents or a type, a model, or the like of a display. However, if contents are received from the external data server, image quality control information which corresponds to each of the contents may also be received and provided from the external data server. Here, the image quality control information may be added to the contents in a metadata format or may be formed into a file separate from the contents.

The storage unit 220 may store image quality control information which corresponds to each of the contents or a type and a product model of a watching apparatus. For example, the storage unit 220 may store image quality control information which corresponds to a watching apparatus which is a TV and image quality control information which corresponds to a watching apparatus which is a smartphone, or the like. The storage unit 220 may store image quality control information which corresponds to a TV made by A company and image quality control information corresponding to a TV made by B company if the watching apparatus is the TV. The storage unit 220 may also respectively store image quality control information which corresponds to model A1 and model A2 if the TV is made by the A company.

The storage unit 220 may store image quality control information selected for each of the contents as user information, e.g., may store the image quality control information according to regions, ages, and genders.

The storage unit 220 may store image quality control information according to selection preferences for types and genres of contents. Therefore, if image quality control information is not provided for particular contents, appropriate image quality control information may be provided in consideration of types and genres of contents.

The controller 230 controls overall operation of the server 200.

In particular, if a service request for a particular contents is received from the image processing apparatus 100, the controller 230 may control added pre-stored image quality control information to the corresponding contents and transmit the contents with the image quality control information. In this case, the service request may be a request for a channel selection, a download service, or a streaming service.

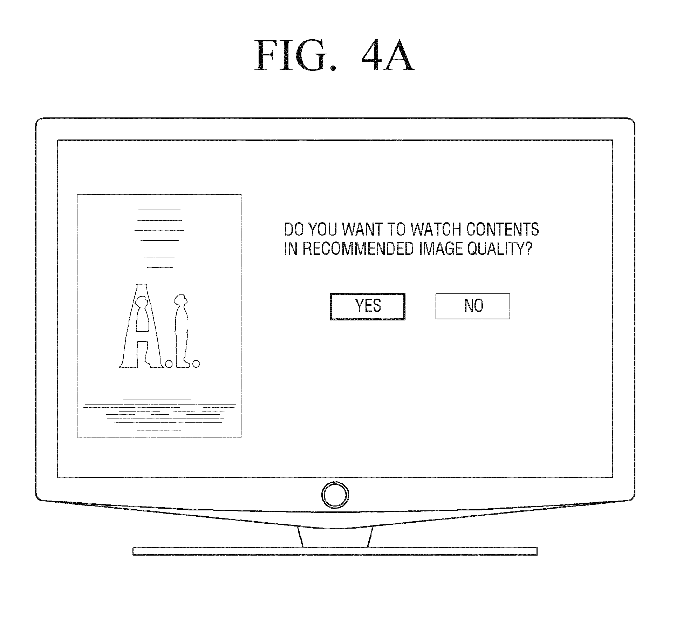

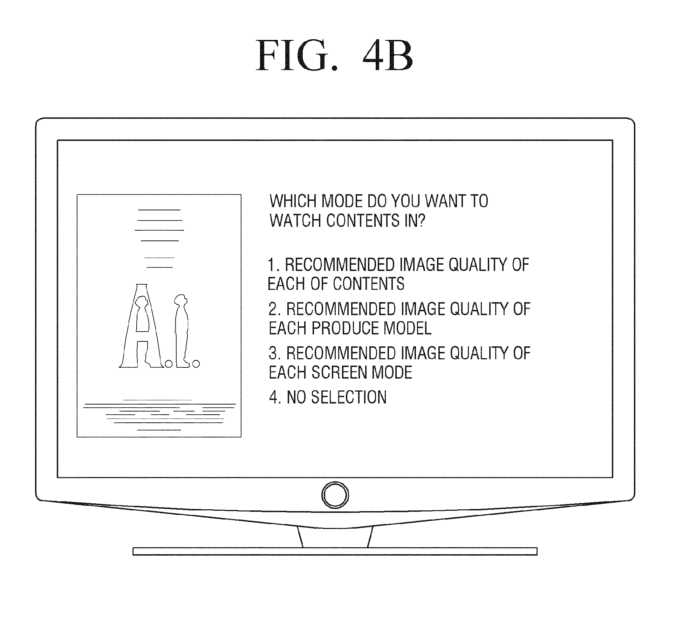

FIGS. 4A and 4B are views illustrating UI screens according to various exemplary embodiments of the present inventive concept.

According to an exemplary embodiment, if a user selects particular contents as shown in FIG. 4A, and image quality control information which corresponds to the particular contents exists, an inquiry window, which inquires about whether to watch contents in a corresponding image quality, may be displayed.

In this case, an operation of selecting particular contents may be an operation of selecting particular contents but may also be an operation of selecting a broadcast channel to select broadcast contents.

According to another exemplary embodiment, if a plurality of pieces of image quality control information which corresponds to the particular contents selected by the user as shown in FIG. 4B, all of the plurality of pieces of image quality control information may be displayed so that the user watches the contents in a desired image quality.

For example, the user may select a desired image quality from a recommended image quality of each of contents, a recommended image quality of each product model, and a recommended image quality of each screen mode.

However, this is only an exemplary embodiment, and a UI screen may be constituted so that the user selects the above-mentioned recommended image qualities one by one, or combines and selects the above-mentioned recommended image qualities.

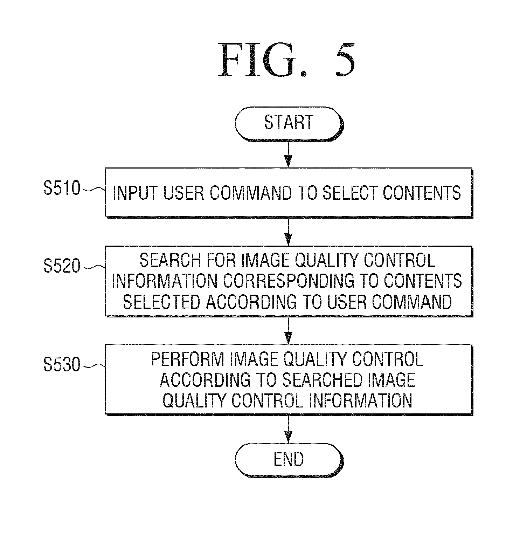

FIG. 5 is a flowchart illustrating a method of controlling an image processing apparatus according to an exemplary embodiment of the present inventive concept.

Referring to FIG. 5, in operation S510, a user command which is to select contents is input. In operation S520, image quality control information which corresponds to contents selected according to the user command, is searched.

In operation S530, an image quality control is performed according to the searched image quality control information.

In operation S520, image quality control information which corresponds to a characteristic of each of contents may be searched.

In operation S520, corresponding image quality control information may be searched according to whether a displayed image is a 2D or 3D image.

In operation S520, image quality control information which corresponds to a product model of the image processing apparatus may be searched.

In operation S520, image quality control information may be searched in consideration of at least two or more of a characteristic of each of the contents, whether a displayed image is a 2D or 3D image, and a product model of the image processing apparatus.

In operation S520, image quality control information included in metadata added to the contents may be detected.

In operation S520, image quality control information which corresponds to contents may be searched through a network.

In operation S520, image quality control information which corresponds to contents may be searched through an internal or external storage medium.

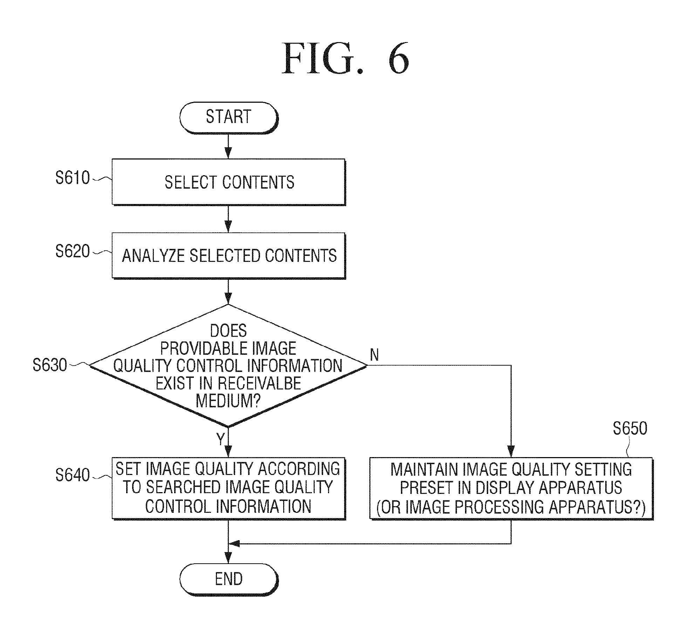

FIG. 6 is a flowchart illustrating a method of controlling an image processing apparatus according to another exemplary embodiment of the present inventive concept.

Referring to FIG. 6, in operation S610, a user selects contents that the user desired to watch. In operation S620, the selected contents are analyzed.

In operation S630, a receivable medium is searched for providable image quality control information which corresponds to the analyzed contents. For example, various types of searches, such as a search of a network, a search of an internal/external storage medium, a search of metadata added to contents, etc., may be performed.

If the image quality control information is searched in operation S630, image quality setting is performed according to the searched image quality control information in operation S640.

If the image quality control information is not searched in operation S630, image quality setting preset in the image processing apparatus is maintained in operation S650.

Therefore, an image may be provided in an image quality optimized for each of contents without performing image quality setting in the image processing apparatus.

The present inventive concept can also be embodied as computer readable code on a computer readable recording medium. The computer readable recording medium is any data storage device that can store data which can thereafter be read by a computer system. Examples of the computer readable recording medium include read-only memory (ROM), random-access memory (RAM), CD-ROMs, magnetic tapes, floppy disks, optical data storage devices, and carrier waves. The computer readable recording medium can also be distributed over network coupled computer systems so that the computer readable code is stored and executed in a distributed fashion. The foregoing exemplary embodiments and advantages are merely exemplary and are not to be construed as limiting the present inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method of controlling an image processing apparatus, the method comprising:
receiving a user command to select contents;
searching for image quality control information corresponding to contents selected according to the user command; and
performing an image quality control according to the searched image quality control information.

2. The method of claim 1, wherein the image quality control information corresponds to a characteristic of each of the contents is searched.

3. The method of claim 1 or 2, wherein the image quality control information corresponding to each image is searched according to whether a display image is a 2-dimensional, 2D, image or a 3-dimensional, 3D, image.

4. The method of any one of claims 1 to 3, wherein the image quality control information corresponding to a product model of the image processing apparatus is searched.

5. The method of any one of claims 1 to 4, wherein the image quality control information comprised in metadata added to the contents is searched.

6. The method of any one of claims 1 to 5, wherein the image quality control information corresponding to the contents is searched through a network.

7. The method of any one of claims 1 to 6, wherein the image quality control information corresponding to the contents is searched through an internal or external storage medium.

8. An image processing apparatus comprising:
a user interface (UI) unit arranged receives a user command to select contents; and
a controller arranged to search for image quality control information corresponding to contents selected according to the user command and to perform an image quality control according to the searched image quality control information.

9. The image processing apparatus of claim 8, wherein the controller is arranged to search for the image quality control information corresponding to a characteristic of each of the contents.

10. The image processing apparatus of claim 8 or 9, wherein the controller is arranged to search for the image quality control information corresponding to each image according to whether a display image is a 2-dimensional, 2D, image or a 3-dimensional, 3D, image.

11. The image processing apparatus of any one of claims 8 to 10, wherein the controller is arranged to search for the image quality control information corresponding to a product model of the image processing apparatus.

12. The image processing apparatus of any one of claims 8 to 11, wherein the controller is arranged to detect the image quality control information comprised in metadata added to the contents.

13. The image processing apparatus of any one of claims 8 to 12, wherein the controller is arranged to search for the image quality control information corresponding to the contents through a network.

14. The image processing apparatus of any one of claims 8 to 13, wherein the controller is arranged to search for the image quality control information corresponding to the contents through an internal or external storage medium.
